(19) Europäisches Patentamt
European Patent Office
Office européen des brevets

(11) Veröffentlichungsnummer: **0 059 368**
**B1**

(12) # EUROPÄISCHE PATENTSCHRIFT

(45) Veröffentlichungstag der Patentschrift: **31.07.85**

(51) Int. Cl.⁴: **C 08 G 65/30**

(21) Anmeldenummer: **82101160.8**

(22) Anmeldetag: **17.02.82**

(54) **Verfahren zur Reinigung von Polytetramethylenether-glykolen.**

(30) Priorität: **27.02.81 DE 3107449**

(43) Veröffentlichungstag der Anmeldung: **08.09.82 Patentblatt 82/36**

(45) Bekanntmachung des Hinweises auf die Patenterteilung: **31.07.85 Patentblatt 85/31**

(84) Benannte Vertragsstaaten: **BE DE FR GB IT NL**

(56) Entgegenhaltungen:
**GB - A - 877 269**
**US - A - 3 016 404**

**CHEMICAL ABSTRACTS, Band 85, Nr. 22, 29. November 1976, Seite 46, Nr. 161206s, Columbus, Ohio, USA**

(73) Patentinhaber: **BASF Aktiengesellschaft, Carl-Bosch-Strasse 38, D-6700 Ludwigshafen (DE)**

(72) Erfinder: **Mueller, Herbert, Dr., Carostrasse 53, D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 059 368 B1

**Beschreibung**

Polytetramethylenether (PTHF) wird üblicherweise unter Verwendung kationischer Katalysatorsysteme aus Tetrahydrofuran hergestellt, wobei ein Polytetramethylenether mit vom Initiatorsystem bestimmten, verschiedenen Endgruppen erhalten wird. PTHF entspricht demnach der allgemeinen Formel

$$X - [(CH_2)_4 - O]_m - (CH_2)_4 - Y,$$

wobei X und Y z. B. für folgende Gruppierungen stehen können und n die Wertigkeit der Lewis-Säure $MX_n$ bedeutet:

| Katalysatorsystem | X | Y |
|---|---|---|
| $R_3O^+MX^-_{n+1}$ | RO— | —OH |
| $FSO_3H$ | $HSO_3$— | —F |
| $AlCl_3/CH_3COCl$ | $CH_3COO$— | —Cl |
| $HClO_4/(CH_3CO)_2O$ | $CH_3COO$— | —$OOCCH_3$ |
| $SbCl_5/(CH_3CO)_2O$ | $CH_3COO$— | —$OOCCH_3$ |

Das Haupteinsatzgebiet des PTHF, die Polyurethanherstellung, erfordert Polyether, bei denen die Endgruppen X und Y Hydroxylgruppen sind. Deshalb müssen die Endgruppen im primär erhaltenen Polymerisat durch geeignete Maßnahmen, beispielsweise durch Verseifung oder Umesterung in Gegenwart von sauren oder alkalischen Katalysatoren in Glykole umgewandelt werden. Als alkalische Katalysatoren bewährt haben sich beispielsweise Alkali- und Erdalkalialkoholate, -hydroxyde, Alkalicarbonate und Ammoniumhydroxid. Nach beendeter Hydrolyse oder Alkoholyse müssen die zugesetzten basischen Katalysatoren auf einfache Weise und ohne Verluste an Wertprodukt möglichst vollständig aus den erhaltenen Polytetramethylenether-glykolen entfernt werden.

Zur Reinigung der Polytetramethylenether-glykole wird nach Angaben der DE-B-2 009 580 der Reaktionsmischung Wasser einverleibt, das nicht polymerisierte Tetrahydrofuran abdestilliert und die Schwefelsäureesterradikale an den Polymerenden bei 90 bis 100°C hydrolysiert. Daraufhin wird die Reaktionsmischung abgekühlt, die obere Ölschicht abgetrennt und Neutralisations-, Dehydrations- und Entsalzungsschritten unterworfen, um ein gereinigtes polymeres Produkt zu erhalten.

Eine aufwendige Reinigungsoperation mit Hilfe einer Gegenstromextraktion und mit Calciumhydroxid als Neutralisationsmittel wird in der US-A-2 751 419 beschrieben. Bei diesen Reinigungsmethoden kommt das Polytetramethylenether-glykol mit Wasser in Berührung. Die Trennung von Wasser und Polymerlösung im neutralen Bereich ist jedoch äußerst schwierig, da die Polymerlösung mit Wasser um so stabilere Emulsionen bildet, je mehr sich der pH-Wert des Gemisches dem Neutralpunkt nähert. Deshalb wird auch hier bei der technischen Durchführung das Polymere zuvor in einem Kohlenwasserstoff, vorzugsweise Toluol, gelöst und als Lösung neutral gewaschen.

Wie schwierig und komplex das Problem ist, wird auch in der DE-A-2 746 911 dargelegt und gleichzeitig eine Methode beschrieben, bei der mit stark basischen Anionenaustauschern auf Polystyrolbasis nach der Hydrolyse die Polymeren neutralisiert werden. Da, bezogen auf das Gewicht, die Neutralisationskapazität der Ionenaustauscher gering ist, müssen relativ große Mengen (5 bis 20 Gew.-%) für die Neutralisation verwendet werden. Dies stellt jedoch einen erheblichen Kostenfaktor dar.

Es sind auch zahlreiche Verfahren zur Reinigung von Polyalkylenethern, die durch Polymerisation von Alkylenoxiden in Gegenwart von basischen Katalysatoren hergestellt werden, bekannt.

Im allgemeinen werden hierzu die alkalihaltigen Polymerisate mit anorganischen oder organischen Säuren neutralisiert, wobei sich Emulsionen aus wäßrigen Salzlösungen und Polyalkylenethern bilden. Anschließend wird das Wasser der Emulsionen unter fortlaufender Temperatursteigerung abdestilliert. Die verbleibenden, im Polyether ausfallenden Salze werden mechanisch abgetrennt.

Verwendet man zur Neutralisation der Polymeren anorganische Säuren wird Schwefelsäure, Phosphorsäure, Salzsäure, sauer reagierende Salze, wie Kaliumhydrogenphosphat, oder organische Säuren, wie Zitronensäure, Tartronsäure u. a. so muß genau bis zum Äquivalenzpunkt neutralisiert werden, um auf der einen Seite ein Minimum an basischen Restalkalisalzen oder auf der anderen Seite ein Minimum an Säureüberschuß zu erhalten. Ferner fällt das Alkalisalz häufig in so feinen Kristallen aus, daß die Filtration, trotz Verwendung von Filtrierhilfsmitteln, Schwierigkeiten bereitet. Daneben können, insbesondere bei der Verwendung von Schwefelsäure, Verfärbungen der Polyalkylenäther

auftreten.

Die Schwierigkeiten, den Äquivalenzpunkt bei der Neutralisation exakt einstellen zu müssen, kann nach Angaben der US-A-3 016 404 durch die Verwendung einer flüchtigen Säure, wie Chlorwasserstoff, beseitigt werden. Hierbei wird der Chlorwasserstoffüberschuß als Gas abdestilliert. Das Verfahren besitzt den Nachteil, daß der Chlorwasserstoff stark korrodierend auf das Gefäßmaterial einwirkt und das überschüssige Gas zur Vermeidung von Luftverschmutzungen mit Hilfe von kostspieligen Absorptions- und Waschtürmen abgetrennt oder vernichtet werden muß.

Nach Angaben von C. A. Band 85 (1976) Seite 46, 161206s, können Polyether-polyole, die durch anionische Polymerisation von Alkylenoxiden mit Hilfe eines Startermoleküls in Gegenwart von basischen Katalysatoren hergestellt werden, mit verdünnter Phosphorsäure auf einen pH-Wert kleiner als 6 eingestellt und der gebildete Niederschlag abfiltriert werden. Nachteilig an diesem Verfahren ist jedoch, daß Polyether-polyole mit einer für die Polyurethanherstellung ausreichenden Reinheit nur erhalten werden, wenn das Filtrat zur Entfernung der überschüssigen Phosphorsäure mit einem Säureabsorbens bei erhöhter Temperatur behandelt und einer erneuten Filtration unterworfen wird.

Zufriedenstellende Ergebnisse werden erzielt, wenn man gemäß DE-C-2 208 614 Alkylenoxide mit basischen Katalysatoren polymerisiert und danach die Katalysatoren in Gegenwart von basischen Magnesiumsalzen mit Kohlendioxid ausfällt.

Nach Angaben der GB-A-877 269 werden zur Neutralisation der Polyalkylenether mit Säuren behandelte Erden verwendet. Nachteilig bei diesem Verfahren ist die Handhabung der Feststoffe, die insbesondere bei größeren Reaktionsansätzen Schwierigkeiten bereiten kann, da bis ca. 4 Gew.-% solcher Erden, bezogen auf das Polyethergewicht, zur Neutralisation der Polymeren erforderlich sind. Um ein klares Filtrat zu erhalten, muß zum Abfiltrieren derartiger Erden ein sehr dichtes Filtermaterial verwendet werden, was wiederum lange Filtrationszeiten zur Folge hat.

Zur Reinigung der Produkte werden die Polyalkylenether — wie bereits erwähnt — mit einem wasserunlöslichen Lösungsmittel verdünnt und die erhaltene Lösung mit Wasser ausgewaschen. Durch die anschließende Lösungsmittelregenerierung wird das Verfahren jedoch apparativ aufwendig. Eine andere Schwierigkeit bereitet die leichte Emulsionsbildung.

Apparativ und im Einsatz von Hilfsstoffen aufwendig sind auch Verfahren, die zur Neutralisation der Reaktionslösung Ionenaustauscher verwenden. Hierbei muß in Gegenwart von Verdünnungsmitteln gearbeitet werden, die anschließend abgetrennt und regeneriert werden müssen. Um hohe Produktverluste zu vermeiden, müssen die Ionenaustauscher vor der Regenerierung völlig produktfrei gewaschen werden.

Aus den genannten Gründen war es bisher ohne langwierige Nachbehandlung der Produkte in vielen Fällen nicht möglich, nach üblichen Verfahren Polyalkylenether technisch herzustellen, die gleichzeitig aschefrei, farblos und geruchlos sind.

Die vorliegende Erfindung erlaubt diese Nachteile zu vermeiden und in einem technisch einfachen Verfahren durch Fällung der basischen Umesterungskatalysatoren mit ortho-Phosphorsäure reine, exakt reproduzierbare Polytetramethylenether-glykole herzustellen, bei denen Säure- und Basenzahl Null sind. Die entstandenen Salze können sehr leicht durch Filtration, Sedimentation oder Zentrifugieren abgetrennt werden, so daß Polytetramethylenether-glykole resultieren, die frei von jeglichen anorganischen Verunreinigungen sind.

Die Erfindung betrifft somit ein Verfahren zur Reinigung von Polytetramethylenether-glykolen durch Neutralisation der alkalischen Katalysatoren mit einer Säure und nachfolgender Abtrennung der gebildeten Salze, das dadurch gekennzeichnet ist, daß man die alkalischen Katalysatoren mit ortho-Phosphorsäure im Äquivalenzverhältnis von 1,5 bis 2,5 : 3 behandelt.

Es war überraschend und keineswegs vorhersehbar, daß sich Polytetramethylenether-glykole nach dem erfindungsgemäßen Verfahren auf einfachste Weise reinigen lassen, das aus der US-A-3 016 404 bekannt war, daß sirupöse Phosphorsäure zur Neutralisation von rohen Alkylenoxid-polyethern absolut ungeeignet ist. Erst bei Verwendung von Phosphorsäure-Kaliumionen-Äquivalenzverhältnissen von mindestens 3,0 konnten die Kaliumionen vollständig ausgefällt werden. Dies führte jedoch zu Polyoxyalkylenethern mit hohen Säurezahlen.

Wie bereits dargelegt wurde, werden bei der Polymerisation von Tetrahydrofuran Polymere erhalten, die in Abhängigkeit vom Katalysatorsystem und Polymerisationsmedium als Endgruppen üblicherweise Acylreste, vorzugsweise Acetatgruppen, besitzen. Durch Umesterung mit niedermolekularen Alkoholen, vorzugsweise solchen mit 1 bis 4 C-Atomen, wie z. B. Methanol, Ethanol oder n-Butanol in Gegenwart von basischen Katalysatoren, beispielsweise Alkalialkoholaten oder -hydroxiden, wie Natriummethylat, Kaliumisopropylat, Natrium- und Kaliumhydroxid oder Calciumoxid und Calciumhydroxid können Polytetramethylenether-glykoldiacetate in die entsprechenden -glykole übergeführt werden.

Zur Neutralisation der basischen Katalysatoren wird beim erfindungsgemäßen Verfahren vorzugsweise wasserfrei ortho-Phosphorsäure verwendet. Geeignet sind jedoch auch die handelsüblichen wäßrigen ortho-Phosphorsäuren, beispielsweise sirupöse (85%ige) Phosphorsäure.

Ein wesentliches Merkmal des erfindungsgemäßen Verfahrens besteht darin, die ortho-Phosphorsäure im richtigen Mengenverhältnis zum basischen Katalysator in Anwendung zu bringen. Neutrale Polytetramethylenether-glykole, die frei von anorganischen Verunreinigungen sind, werden nur dann

erhalten, wenn das Äquivalenzverhältnis von basischem Katalysator zur ortho-Phosphorsäure von 1,5 bis 2,5 : 3, vorzugsweise ungefähr 2 : 3 beträgt. Bei ganz geringen Abweichungen von diesem Äquivalenzverhältnis können noch Polytetramethylenether-glykole erhalten werden, die den meisten Reinheitsanforderungen entsprechen. Es ist aber in jedem Fall zu vermeiden, daß das Äquivalenzverhältnis die Grenzen von 1 : 3 und 3 : 3 erreicht.

Die Neutralisationstemperatur ist für die Durchführung des Verfahrens von untergeordneter Bedeutung. Zweckmäßigerweise wird man bei Temperaturen von 10° bis 100°C, vorzugsweise 20° bis 60°C arbeiten. Ein eventuell vorliegender erhöhter Druck übt keinen Einfluß auf die Neutralisation aus. Hingegen hat es sich als vorteilhaft erwiesen, nach Zugabe der ortho-Phosphorsäure noch einige Zeit, beispielsweise 0,5 bis 5 Stunden, vorzugsweise 0,5 bis 2 Stunden intensiv zu Rühren und dadurch den Reaktionsansatz zu durchmischen.

Nach erfolgter Neutralisation und ausreichender Nachreaktionszeit lassen sich die bei der Neutralisation entstandenen Salze mit den üblichen Trennmethoden, z. B. Filtration oder Zentrifugieren leicht abtrennen. Hierbei ist es nicht nötig, eventuell vorhandenes Lösungsmittel vor der Abtrennung abzudestillieren.

Die folgenden Beispiele erläutern das erfindungsgemäße Verfahren ohne es zu beschränken. Die genannten Teile sind Gewichtsteile, sie verhalten sich zu Volumenteilen wie Kilogramm zu Litern.

## Beispiel 1

In einem heizbaren Rührwerksbehälter mit aufgesetzter Fraktionierkolonne werden 450 Teile Polytetramethylenether-glykoldiacetat, das durch Polymerisation von Tetrahydrofuran mit Bleicherde als Katalysator und Essigsäureanhydrid als Reglersubstanz hergestellt wurde und ein mittleres Molekulargewicht von 650 besaß, 450 Teile Methanol und 0,073 Teile Natriummethylat gemischt, die Mischung zum Sieden erhitzt und über den Fraktionieraufsatz (45 theor. Böden) das gebildete Methylacetat als Azeotrop mit Methanol (19%) mit einem Siedepunkt von 54°C abdestilliert. Sobald die Kopftemperatur dem Siedepunkt von reinem Methanol entspricht, wird auf 50°C abgekühlt und mit 0,078 Teilen 85%iger ortho-Phosphorsäure versetzt. Die Mischung wird noch 1 Stunde gerührt und anschließend über eine Seitz-Supra®-Filterschicht, Seitz-K 800 filtriert. Die farblose klare Lösung wird durch Destillation von Methanol befreit. Es verbleibt als Rückstand Polytetramethylenether-glykol vom mittleren Molekulargewicht 650, das eine Basen- und Säurezahl von 0 mg KOH/g besitzt und frei von Aschebestandteilen ist. Natrium- und Phosphationen konnten im Polymerisat nicht nachgewiesen werden.

Neutralisiert man dagegen mit Schwefelsäure, so resultiert entweder ein Produkt mit einer Basenzahl von 1,7 mg KOH/g bzw. einer Säurezahl von 1,3 mg KOH/g je nachdem, ob die Neutralisation mit einem ganzen oder einem doppelten Äquivalent-Schwefelsäure erfolgte. Besonders unangenehm ist in diesem Falle die schlechte Filtrierbarkeit des Produktes. Die Filtrationsgeschwindigkeiten der mit Phosphorsäure oder Schwefelsäure neutralisierten Produkt verhalten sich etwa wie 1 : 100.

Verwendet man anstelle von Schwefelsäure andere organnische Säuren, wie z. B. Salzsäure, Salpetersäure oder organische Säuren, wie z. B. Oxalsäure, Ameisensäure, Weinsäure oder Zitronensäure, so treten dieselben Probleme auf wie bei der Neutralisation mit Schwefelsäure. Das Polymerisat ist nur schwer durch Filtration zu reinigen und man findet Säure- bzw. Basenzahlen, die zwischen 1—2 mg KOH/g liegen.

**Patentanspruch**

Verfahren zur Reinigung von Polytetramethylenether-glykolen durch Neutralisation der alkalischen Katalysatoren mit einer Säure und nachfolgender Abtrennung der gebildeten anorganischen Salze, dadurch gekennzeichnet, daß man die alkalischen Katalysatoren mit ortho-Phosphorsäure im Äquivalenzverhältnis von 1,5 bis 2,5 : 3 behandelt.

**Claim**

A process for the purification of polytetramethylene ether-glycols by neutralizing the alkaline catalyst with an acid and subsequently separating off the inorganic salts formed, wherein the alkaline catalyst is treated with orthophosphoric acid in an equivalence ratio of from 1.5 to 2.5 : 3.

**Revendication**

Procédé d'épuration de polytétraméthylènéther-glycols par neutralisation des catalyseurs alcalins avec un acide et séparation subséquente du sel inorganique formé, caractérisé par le fait que l'on traite les catalyseurs alcalins avec de l'acide orthophosphorique en rapport d'équivalence de 1,5 à 2,5/3.